# EUROPEAN PATENT APPLICATION

(11) **EP 4 840 648 A1**
(43) Date of publication of application: **18.11.2026**
(21) Application number: 25382484.1
(22) Date of filing: 13.05.2025
(51) Int. Cl.: B42D 25/23, B42D 25/36, B42D 25/378, B42D 25/45, B29C 48/16, B32B 23/00, C09D 11/00, C09D 11/037

(54) **METHOD AND MANUFACTURING DEVICE FOR MANUFACTURING A CARD BODY FOR A CHIP CARD AND SAME WITH PIGMENTS BASED ON FIBROUS CELLULOSE STRUCTURES**

(71) Applicant: Giesecke+Devrient ePayments GmbH, 81677 München (DE)
(72) Inventor: Constans, Nil, 08820 El Prat de Llobregat (Barcelona) (ES); Gomis Marc, Carvajal, 08820 El Prat de Llobregat (Barcelona) (ES); Molina Vidal, Carles, 08820 El Prat de Llobregat (Barcelona) (ES)
(74) Representative: LKGLOBAL Partnerschaftsgesellschaft mbB

(57) **Abstract**

A method for manufacturing a sheet (21) and/or a film (22), in particular for producing card bodies (2) and/or security elements (6) for portable data carriers (1), a card body (2) and/or security element (6) for a portable data carrier (1), a portable data carrier (1), such as a transaction card, a manufacturing device (20) for manufacturing a card body (2) and/or a security element (6) for a portable data carrier (1), and use of a pigment (P) are provided, wherein the method comprises the following steps: providing at least one substrate compound (C) as a basis for the sheet (21) and/or a film (22); and providing at least one pigment (P) for tinting the at least one substrate compound (C) and/or an ink (D) for printing onto the sheet (21) and/or a film (22) formed based on the at one substrate compound (C); wherein the at least one pigment (P) is based on fibrous cellulose structures.

## Description

### Technical Field

The present disclosure relates to the field of manufacturing chip cards or other portable data carriers as far as possible from bio-based materials. In particular, the present disclosure relates to a method for manufacturing a sheet and/or a film, in particular for producing card bodies and/or security elements for portable data carriers, a card body and/or security element for a portable data carrier, a portable data carrier, a manufacturing device for manufacturing a card body and/or a security element for a portable data carrier, and to use of a pigment.

### Background of the Invention

Chip cards, also known as portable data carriers, are known from the state of the art, and can be used, for example, for cashless payment of goods or services, for personal identification and/or for access to Internet-based application programs. Accordingly, there are, for example, card-shaped data carriers in the form of chip cards in general, payment cards, such as credit cards or debit cards, as well as ID cards or identity cards. Such chip cards usually have a card body carrying a chip module comprising an electronic circuit with an electronic component, such as an integrated chip, which can be accessed in order to read data from it and based on this, allow a legitimate owner of the data carrier to perform and/or authorize a specific action, such as a transaction, in particular a financial transaction. Certain functions of the chip card may be carried out in a contactless manner through an antenna module embedded in the card body and connected to the chip module, so that the chip module may be accessed in a contactless manner, for example, by a corresponding terminal, such as a payment terminal, via near field communication (NFC) enabled by the antenna module.

In addition, portable data carriers can include optical elements that can serve both decorative and security purposes. Security elements are also known from the state of the art and can, for example, be attached to portable data carriers or banknotes and other cards. The security elements can, for example, be provided on official documents and documents for establishing personal identity. For example, the security elements can include decorative and/or anti-counterfeiting images as well as corresponding patterns, emblems, seals or the like.

According to the state of the art, card bodies of portable data carriers and security elements are generally made of plastic, such as polyvinyl chloride (PVC). Commonly, mineral based additives are used to achieve high opaque white colour for PVC and silkscreen inks (water and solvent based). However, currently, such white pigments as used according to the prior art are usually based on titanium dioxide (TiO₂) which is classified as potential carcinogenic by EU regulations. They may be potentially banned from certain usages in the future.

Parker, R.M., Zhao, T.H., Frka-Petesic, B. et al. Cellulose photonic pigments. Nat Commun 13, 3378 (2022), https:/ / doi.org/10.1038/s41467-022-31079-9, state that when pursuing sustainable approaches to fabricate photonic structures, nature can be used as a source of inspiration for both the nanoarchitecture and the constituent materials. Although several biomaterials have been promised as suitable candidates for photonic materials and pigments, their fabrication processes have been limited to the small to medium-scale production of films. Here, by employing a substrate-free process, structurally coloured microparticles are produced via the confined self-assembly of a cholesteric cellulose nanocrystal (CNC) suspension within emulsified micro-droplets. Upon drying, the droplets undergo multiple buckling events, which allow for greater contraction of the nanostructure than predicted for a spherical geometry. This buckling, combined with a solvent or thermal post-treatment, enables the production of dispersions of vibrant red, green, and blue cellulose photonic pigments. The hierarchical structure of these pigments enables the deposition of coatings with angular independent colour, offering a consistent visual appearance across a wide range of viewing angles.

The CELLIGHT project (see https://www.vttresearch.com/en/project_news/vtt-and-partners-are-set-develop-cellulose-based-opacifiers-alternative-titanium), backed by approx. €1.3 million in funding from Business Finland, aims to develop cellulose-based alternatives to titanium dioxide (TiO2 ), a widely used whitener in paints, cosmetics, and coatings. Coordinated by VTT and run in collaboration with Aalto University and the University of Helsinki, a groundbreaking two-year initiative is set to launch, focusing on the development and application of cellulose-based opacifiers. The CELLIGHT project aims to replace the titanium dioxide (TiO2) with innovative, sustainable bio-based alternatives, marking a significant leap towards greener and sustainable solutions in the industry. TiO₂, a widely used whitening agent with a global production of around 8 million tons annually, poses environmental concerns. It is responsible for emitting between 60 to 96 million tons of CO₂ each year. Besides the open pit mining of TiO₂ poses a threat to the delicate environment. In response, the CELLIGHT project seeks to create bio-based opacifiers that match TiO₂'s light-scattering capabilities while offering a greener and sustainable option for consumers.

A disadvantage of the portable data carriers known from the state of the art is that the materials used to manufacture them are not made from a satisfactory proportion of renewable raw materials. Disposal of data carriers according to the state of the art can also be costly and problematic from an ecological point of view. In particular, materials classified as biodegradable, such as polyurethane, can indeed decompose within a certain period of time, but depending on the circumstances, the decomposition period can be very long and the resulting decomposition products can be undesirable, in particular if further components, such as TiO₂, are contained in the portable data carriers.

### Summary of the Invention

It is therefore a task of the present invention to provide portable data carriers and security elements which are as biodegradable as possible, and which can be produced as simply and inexpensively as possible. In particular, it can be regarded as a task of the present invention to improve the ecological compatibility of portable data carriers and security elements, both with regard to the materials used for this purpose and with regard to their degradation products. These and other objects are at least partly solved by the subject-matter of the independent claims. Exemplary embodiments are shown in the dependent claims as well as in the following description and accompanying drawings.

According to an aspect, a method for manufacturing a sheet and/or a film, in particular for producing card bodies and/or security elements for portable data carriers, comprising the following steps: providing at least one substrate compound as a basis for the sheet and/or a film; and providing at least one pigment for tinting the at least one substrate compound and/or an ink for printing onto the sheet and/or a film formed based on the at one substrate compound; wherein the at least one pigment is based on fibrous cellulose structures.

According to an aspect, a chip card, in particular a transaction card, is provided, comprising a corresponding card body and a chip module connected to the antenna module, and/or at least sectionwise manufactured by a corresponding method.

According to an aspect, a card body and/or security element for a portable data carrier, is provided, wherein the card body or the security element is produced at least in sections by a corresponding method according.

According to an aspect, a portable data carrier is provided, having a corresponding card body and/or a corresponding security element.

According to an aspect, a manufacturing device for manufacturing a card body and/or a security element for a portable data carrier, is provided, wherein the manufacturing device is configured to carry out a corresponding method.

According to an aspect, a use of a pigment is provided, wherein the pigment is based on fibrous cellulose structures for tinting a substrate compound for forming a sheet and/or a film, in particular for producing card bodies and/or security elements for portable data carriers, and/or in an ink for printing onto the sheet and/or film.

The fibrous cellulose structures can be at least partly, preferably up to a hundred percent, plant based. Any card product using white inks or plastic components can make use of the pigment. The sheet and/or a film can be formed from the at least one substrate compound containing the pigment.

The proposed solution has the advantage over the prior art, that environmentally harmless alternatives to potentially harmful compounds, such as TiO₂, can be replaced by pigments based on fibrous cellulose structures that are both, biologically produced and degradable. Thus, card bodies and/or security elements can be produced from an increased amount of renewable raw materials or at least from natural sources. In this way, at least the card bodies or security elements of the portable data carriers can be enabled to be completely or at least largely biodegradable, whereby their degradation times and products can be unproblematic and thus help to ensure a high level of environmental compatibility.

Further developments can be derived from the dependent claims and from the following description. Features described with reference to respective sheets and/or films for card bodies, security elements, portable data carriers and/or manufacturing devices according to the invention and their advantages apply correspondingly to methods for their manufacture according to the invention. The present components of sheets, foils, card bodies, security elements, portable data carriers and/or manufacturing devices according to the invention can each be formed or provided by corresponding method steps. Further features of the invention are shown in the claims, the figures and the description of the figures.

According to a possible embodiment, at least one core layer and/or at least one surface layer of the card body is formed with the sheet and/or the film. The core layer can essentially provide the card body with its mechanical properties, in particular the required stability, for example in order to be able to accommodate a data carrier module of the portable data carrier. The surface layer can protect the core layer from harmful environmental influences. Both the core layer and the surface layer can support or form the security element and may contain the pigment based on fibrous cellulose. In this way, the environmental compatibility of portable data carriers can be further improved.

According to a possible embodiment, the sheet and/or the film comprises several partial layers. The partial layers or sub-layers may be co-extruded and/or laminated together. For example, between 1 and 5, preferably between 2 and 4, preferably 3 sub-layers can form the sheet and/or the film. The sub-layers can be provided with the pigments based on fibrous cellulose according to the respective requirements. A structure of the sheet and/or the film consisting of sub-layers can help to design the rigidity and stability of the data body in accordance with the respective requirements.

According to a possible embodiment, the partial layers are being coextruded. Through the coextrusion, the partial layers may be produced and provided with the pigments based on fibrous cellulose in an efficient manner. This helps in facilitating to provide card bodies and/or security elements containing an increased amount of renewable raw materials or compounds from natural sources.

According to a possible embodiment, the pigment is configured to block above 50%, preferably above 60%, most preferably above 70% of the visible light spectrum. For example, the pigment can block up to 90% of the visible light, or even up to 100% of the visible light. In this way, opaque features can be provided to card bodies and/or security elements containing an increased amount of renewable raw materials or compounds from natural sources.

According to a possible embodiment, the pigment has a white colour. The pigment based on fibrous cellulose can be used to provide white inks and/or white plastics. This further helps in providing white colour elements to card bodies and/or security elements containing an increased amount of renewable raw materials or compounds from natural sources.

### Brief Description of the Drawings

- Fig. 1: is a schematic top view of an embodiment of a portable data carrier comprising a card body with a data carrier module accommodated therein.
- Fig. 2: is a schematic cross-sectional view of the card body along a sectional line A-A depicted in Fig. 1.
- Fig. 3: is a schematic top view of a manufacturing device and a plurality of card bodies for portable data carriers before separation.
- Fig. 4: is a diagram of method steps for manufacturing the card body.

### Detailed Description of Embodiments

The illustrations in the figures are schematic and not to scale. If the same reference symbols are used in different figures in the following description of the figures, these designate the same or similar elements. However, identical or similar elements may also be designated by different reference signs.

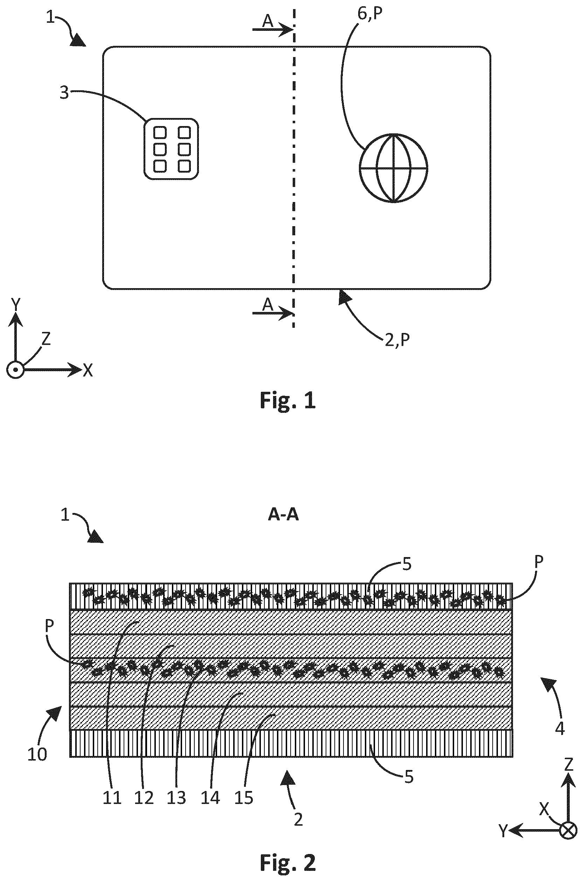

Fig. 1 shows a schematic top view of a portable data carrier 1 with a card body 2, in which a data carrier module 3 can be accommodated. The portable data carrier 1 extends in a longitudinal direction X, a transverse direction Y and a vertical direction Z, which together form a Cartesian coordinate system. The card body 2 comprises a core layer 4, the surface of which is provided at least in sections with a surface layer 5 (see Fig. 2). The core layer 4 and/or the surface layer 5 can carry, have, form, and/or be provided with a security element 6 and may contain a pigment P based on fibrous cellulose.

Fig. 2 shows a schematic cross-sectional view of the card body 2 of the portable data carrier 1 along a sectional line A-A depicted in Fig. 1. The card body 2 comprises a core layer 4, which is covered at the top and bottom by a surface layer 5. The core layer can be provided as a composite layer 10 comprising partial layers 10 or sub-layers, such as, for example, a first partial layer 11, a second partial layer 12, a third partial layer 13, a fourth partial layer 14 and/or a fifth partial layer 15.

Fig. 2 also shows that a core layer thickness of the core layer 5 measured essentially parallel to the height direction Z can be greater than a surface layer thickness of the surface layer 5, which in turn can be smaller, greater and/or approximately the same as a partial layer thickness of the partial layers 11, 12, 13, 14, 15 of the layer composite 10. For example, the core layer 4 or the layer composite 10 can be (co-)extruded. The surface layer 5 can also have a corresponding layer structure. The pigments P can be contained in each of the layers of the card body 2. In the present example, the pigments P are provided in the core layer 4, in particular, in one of the partial layers, and in the top layer 5.

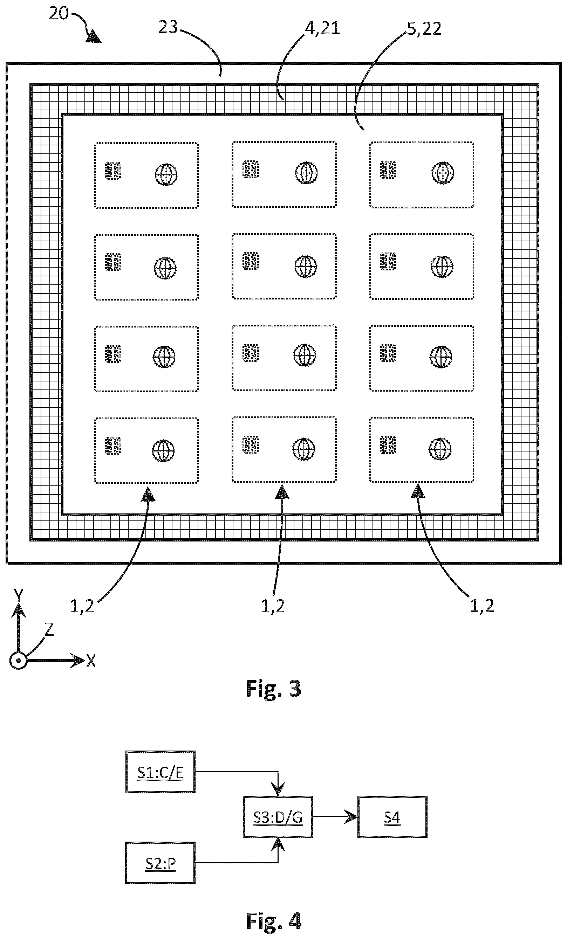

Fig. 3 shows a schematic top view of a manufacturing device 20 and a plurality of card bodies 2 for portable data carriers 1 before separation. The core layer 4 can be provided for a plurality of card bodies 2 as a sheet 21, for example a core layer sheet. The surface layer 5 may be provided as a film 22 for a plurality of card bodies 2 and may cover the sheet 21. The sheet 21 may be clamped or held in and/or on a holding device 23, for example a clamping frame and/or laminating plate, of the manufacturing device 20, at least as long as the core layer 4 and the surface layer 5 can be bonded together, for example by laminating, gluing, spraying, applying, sticking or the like. The plurality of card bodies 2 or the portable data carriers 1 comprising them can then be removed from the manufacturing device 20 for separation, for example together as a production sheet, or separated within it, for example by punching, laser cutting or alike.

Fig. 4 shows a diagram of a method with steps S for producing the sheet 21 and/or the film 22, for example for producing the card body 2. Thus, in a first step S1, a substrate compound C and/or solvent compound E can be provided. In a second step S2, the pigment P may be provided. In a third step S3, a base mixture G for forming the card body 2 and/or an ink D may be mixed from the pigments P added to the substrate compound D and/or solvent compound E, respectively. In a fourth step S4, the base mixture G and/or an ink D may be applied to form the card body 2 and/or the security element 6, for example, by printing, extrusion, etc.

While at least one example embodiment of the invention(s) is disclosed herein, it should be understood that modifications, substitutions and alternatives may be apparent to one of ordinary skill in the art and can be made without departing from the scope of this disclosure. This disclosure is intended to cover any adaptations or variations of the example embodiment(s). In addition, in this disclosure, the terms "comprise" or "comprising" do not exclude other elements or steps, the terms "a", "an" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### List of Reference Signs

- 1: Portable data carrier
- 2: Card body
- 3: Data carrier module
- 4: Core layer
- 5: Surface layer
- 6: Security element
- 10: Layer composite/partial layers
- 11: First partial layer / sublayer
- 12: Second partial layer / sublayer
- 13: Third partial layer / sublayer
- 14: Fourth partial layer / sublayer
- 15: Fifth partial layer / sublayer

- 20: Manufacturing device
- 21: sheet/core layer sheet
- 22: Film/top layer film
- 23: Mounting device/stenter frame

- C: Substrate compound
- D: Ink
- E: Solvent compound
- G: Base mixture
- P: Pigment
- S: Step
- X: Longitudinal direction
- Y: Transverse direction
- Z: Height direction

- S1: Provide substrate and/or solvent compound
- S2: Provide pigment
- S3: Mixing the base mixture / ink
- S4: Apply base mixture / ink

## Claims

1. Method for manufacturing a sheet (21) and/or a film (22), in particular for producing card bodies (2) and/or security elements (6) for portable data carriers (1), comprising the following steps:
providing at least one substrate compound (C) as a basis for the sheet (21) and/or a film (22); and
providing at least one pigment (P) for tinting the at least one substrate compound (C) and/or an ink (D) for printing onto the sheet (21) and/or a film (22) formed based on the at one substrate compound (C);
wherein the at least one pigment (P) is based on fibrous cellulose structures.

2. Method according to claim 1, wherein at least one core layer (4) and/or at least one surface layer (5) of the card body (2) is formed with the sheet (21) and/or the film (22).

3. Method according to claim 1 or 2, wherein the sheet (21) and/or the film (22) comprises several partial layers (10, 11, 12, 13, 14, 15).

4. Method according to claim 3, wherein the partial layers (10, 11, 12, 13, 14, 15) are being coextruded.

5. Method according to at least one of the above claims, wherein the pigment (P) is configured to block above 50%, preferably above 60%, most preferably above 70% of the visible light spectrum.

6. Method according to at least one of the above claims, wherein the pigment (P) has a white colour.

7. Card body (2) and/or security element (6) for a portable data carrier (1), **characterised in that** the card body (2) or the security element (6) is produced at least in sections by a method according to at least one of claims 1 to 6.

8. Portable data carrier (1), such as a transaction card, **characterised by** a card body (2) and/or a security element (6) according to claim 7.

9. A manufacturing device (20) for manufacturing a card body (2) and/or a security element (6) for a portable data carrier (1), **characterised in that** the manufacturing device (20) is configured to carry out a method according to at least one of claims 1 to 6.

10. Use of a pigment (P) based on fibrous cellulose structures for tinting a substrate compound (C) for forming a sheet (21) and/or a film (22), in particular for producing card bodies (2) and/or security elements (6) for portable data carriers (1), and/or in an ink (D) for printing onto the sheet (21) and/or film (22).
